# FASCICULE DE BREVET EUROPEEN

(11) **EP 2 082 961 B1**
(45) Date de publication et mention de la délivrance du brevet: **09.03.2011**
(21) Numéro de dépôt: 09151190.7
(22) Date de dépôt: 23.01.2009
(51) Int. Cl.: B64D 27/26

(54) **Ensemble constitué d'un turboréacteur multiflux, d'un pylône pouvant être fixé à la structure d'un aéronef, et d'une suspension du turboréacteur au pylône**
Anordnung aus einem Nebenstromtriebwerk, einem Pylon zum Befestigen an einer Flugzeugstruktur und einer Aufhängung des Nebenstromtriebwerks am Pylon
Arrangement of a turbo fan gas turbine engine, a pylone for being attached on an aircraft structure and a suspension of the turbo fan gas turbine engine on the pylon

(30) Priorité: 25.01.2008 FR 0800402
(43) Date de publication de la demande: 29.07.2009
(73) Titulaire: SNECMA, 75015 Paris (FR)
(72) Inventeur: Balk, Wouter, 77000 Melun (FR)
(74) Mandataire: Bloch & Bonnétat

(56) Documents cités:
- EP-A- 0 147 878
- EP-A- 1 571 081
- GB-A- 2 303 884
- US-A- 4 022 018

## Description

La présente invention concerne la fixation d'un turboréacteur multiflux à un aéronef par suspension à la voilure ou toute autre structure de ce dernier au moyen d'un pylône.

Un turboréacteur multiflux comprend un turbomoteur constitué par un moteur à turbine à gaz entraînant une soufflante. L'invention concerne les moteurs à soufflante située à l'avant. L'air comprimé par la soufflante est partagé en deux ou plusieurs flux concentriques ; un flux primaire interne traverse le moteur à turbine à gaz en étant chauffé dans la chambre de combustion puis détendu dans la section de turbine qui entraîne les sections de compression de l'air, avant d'être éjecté dans l'atmosphère. Le ou les autres flux restent froids ; ils sont éjectés directement dans l'atmosphère ou bien mélangés auparavant aux gaz du flux primaire et fournissent l'essentiel de la poussée. Le taux de dilution, qui est le rapport entre le débit d'air froid et le débit de gaz chaud, dans le cas de moteurs civils est relativement élevé, actuellement il est couramment de l'ordre de cinq à six. Ce type de moteur comprend deux éléments de carter structuraux par lesquels transitent les efforts entre l'aéronef et le moteur, l'un à l'avant dans le prolongement du carter de la soufflante, formant le carter dit intermédiaire et l'autre à l'arrière, formant le carter d'échappement. La fixation du moteur à la voilure est assurée par deux plans de suspension transversaux passant par ces éléments structuraux.

Le pylône ou mât d'accrochage est une pièce structurale, rigide, constituant l'interface de liaison entre le moteur et la voilure de l'aéronef et en particulier est relié au moteur dans ces deux plans. Il permet de transmettre à la structure de l'aéronef les efforts depuis le moteur. Il a pour fonction aussi d'assurer le cheminement des servitudes. Le pylône a généralement une structure allongée à section rectangulaire de type caisson. Il est formé par assemblage de longerons supérieurs et inférieurs et de panneaux latéraux raccordés entre eux par l'intermédiaire de nervures transversales. Il comporte d'une part des moyens de fixation au moteur et d'autre part sur sa partie supérieure des moyens de fixation à la voilure de l'avion.

Ce type d'accrochage du moteur est utilisé et fonctionne de façon satisfaisante pour des moteurs ayant un taux de dilution ci-dessus rappelé.

L'évolution technologique des moteurs conduit à une augmentation du taux de dilution allant jusqu'à son doublement dans le futur. Il s'ensuit une modification structurelle qui rendrait le mode d'attache actuel moins adapté. En effet le diamètre de la soufflante est augmenté alors que celui de la partie concernant le flux primaire ne progresse pas dans les mêmes proportions et reste du même ordre. Les charges induites sur l'axe de ce type de moteur, en particulier au décollage de l'aéronef, sont alors plus importantes alors que la partie centrale en aval de la soufflante reste relativement souple. Aucune solution n'est prévue ni même possible pour la rendre plus rigide. Cela se traduit par des déformations le long de l'axe, une flexion, et des désalignements des éléments tournants qui diminuent les performances du moteur.

Dans le document US2005/0194493 on a proposé de réduire les déformations non axisymétriques du moteur en rendant la suspension du moteur hyperstatique à partir d'une déformation du moteur prédéterminée qui survient notamment au décollage de l'avion. En vol de croisière, la suspension demeure isostatique et est effective de façon conventionnelle. Une bielle reliant le carter de la soufflante à un élément du pylône de suspension à la voilure forme un moyen s'opposant à la flexion longitudinale du moteur. La liaison entre le carter et la bielle est souple de telle façon que la bielle reste en attente et n'est chargée qu'au delà d'une déformation déterminée du carter de la soufflante.

La présente invention propose une solution améliorée.

Ainsi conformément à l'invention, l'ensemble constitué d'un turboréacteur multiflux pourvu d'un carter intermédiaire et d'un carter d'échappement, d'un pylône pouvant être fixé à la structure d'un aéronef, et d'une suspension du turboréacteur au pylône, ladite suspension comprenant un moyen d'accrochage avant entre le moyeu du carter intermédiaire et ledit pylône et un moyen d'accrochage arrière entre le carter d'échappement et le pylône, est caractérisée par le fait qu'elle comprend également un moyen de liaison reliant rigidement le carter intermédiaire au pylône, et que le moyen d'accrochage arrière comprend un moyen pour compenser les variations de diamètre du carter d'échappement de manière à maintenir l'axe du carter d'échappement coaxial à l'axe du carter intermédiaire pendant les différentes phases de vol de l'aéronef.

La suspension de l'invention est donc de type hyperstatique par la liaison rigide entre le carter intermédiaire et le pylône. Une partie des efforts est transmise au pylône par cette liaison. Elle évite ainsi les problèmes qui résulteraient d'une flexion du moteur. En outre dans la mesure où le moteur subit par ailleurs des déformations d'origine thermique, l'invention permet de les compenser en maintenant la co-axialité entre les arbres de soufflante et de turbine.

Conformément à une autre caractéristique, ledit moyen pour compenser les variations de diamètre du carter d'échappement comprend un vérin susceptible de faire varier la distance du carter d'échappement au pylône. Il s'agit en fait plus particulièrement de la hauteur du carter d'échappement par rapport au pylône.

Plus précisément, le dit moyen pour compenser les variations de diamètre est piloté par un capteur mesurant la coaxialité entre le carter de la soufflante et la turbine. Ce capteur selon un mode de réalisation fournit un signal représentatif du jeu en sommet des aubes de soufflante.

Selon un autre mode de réalisation, le capteur fournit une mesure de la variation de hauteur entre le carter de la soufflante et le carter d'échappement.

On décrit maintenant un mode de réalisation de la suspension de l'invention, en référence aux dessins sur lesquels :
La figure 1 représente, vu en perspective, l'accrochage sous aile d'un turboréacteur à double flux selon l'art antérieur ;
La figure 2 montre l'accrochage sous aile d'un turboréacteur à double flux avec liaison hyperstatique,
La figure 3 montre le moteur, vu de côté, équipé du moyen de l'invention et la déformation de l'axe moteur induite par la dilatation du carter d'échappement
La figure 4 montre une vue du moteur en coupe, selon la direction AA, à travers le vérin et la suspension arrière.
La figure 5 montre de façon schématique la commande du vérin hydraulique.

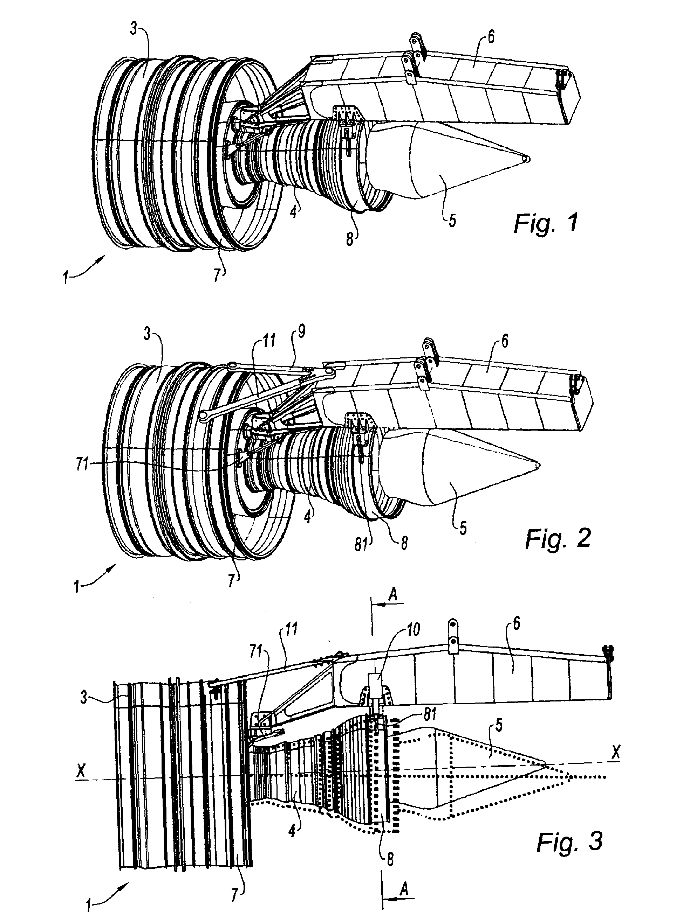

Le moteur représenté sur la figure 1 est un turboréacteur 1 à double flux avec une soufflante à l'avant, tournant autour de l'axe XX du moteur dans le carter de soufflante 3, et non visible. En aval, la partie du moteur que l'on désigne par le terme noyau comprenant les étages de compression en aval de la soufflante, la chambre de combustion et les étages de turbine, est logée à l'intérieur d'un ensemble de carter que l'on désigne carter de flux primaire 4. La partie du moteur en aval du carter de flux primaire comprend le cône 5. Le moteur est suspendu ou accroché sous l'aile d'un aéronef par l'intermédiaire d'un élément rigide, sensiblement parallélépipédique, et non déformable formant le pylône 6. L'accrochage du moteur est assuré par deux éléments structuraux de carter : le carter intermédiaire 7 à l'avant et le carter d'échappement 8. Le carter intermédiaire 7 est situé dans le prolongement du carter de soufflante 3. Il comprend une virole externe, un moyeu, les deux étant reliés par des bras radiaux. Le moyeu supporte les paliers avant du ou des arbres concentriques tournants de la machine. Il y a deux ou plus arbres concentriques dans le cas de moteur double corps ou plus généralement multicorps. Le carter d'échappement 8 est situé en aval du carter de la veine de flux primaire. Il comprend une virole externe reliée par des bras à un moyeu supportant les paliers arrière.

Comme on le voit sur la figure 1, le moteur est suspendu ou accroché en deux plans transversaux qui sont situés au niveau des deux éléments structuraux 7 et 8 de carter. Selon ce mode de suspension, l'accrochage se fait au niveau du moyeu du carter intermédiaire 7 par un moyen d'accrochage avant 71, et de la virole externe du carter d'échappement, par un moyen d'accrochage arrière 81, constitués d'un assemblage de bielles et biellettes. Les charges sont réparties entre l'avant et l'arrière du moteur de manière à transmettre les efforts entre le moteur et l'aéronef selon les six axes de translation et de rotation. On ne décrit pas plus en détail l'assemblage des bielles pour remplir cette fonction, il ne fait pas partie de l'invention.

Dans la mesure où l'attache à l'avant est dotée d'éléments avec des liaisons à rotules, elle ne reprend pas les couples de flexion exercés sur l'axe du moteur par l'ensemble de soufflante, en cas de cabrage de l'aéronef au décollage par exemple. Ces efforts, lorsque le rapport entre les diamètres de carter de soufflante et de carter de veine de flux primaire est élevé, sont susceptibles d'entraîner des déformations, génératrices de pertes de performance.

On propose donc conformément à une caractéristique de l'invention de doter l'attache avant d'une capacité de réagir à un moment de flexion autour d'un axe transversal.

La figure 2 montre le même moteur que précédemment avec un accrochage modifié. La modification a consisté à créer un troisième point de suspension avec les deux bielles 9 et 11. Ici les bielles sont attachées en amont à la virole externe du carter intermédiaire, et, en aval, au pylône 6. La position est en V ouvert vers l'avant mais d'autres configurations sont possibles.

Les autres moyens de suspension sont les mêmes que précédemment.

Grâce à cette liaison supplémentaire les efforts de flexion sont repris par le pylône directement.

La seule solution de solidariser le carter de soufflante au pylône n'est pas satisfaisante dans les phases transitoires de régime du moteur. En effet comme on l'a représenté en traits en pointillés sur la figure 3, l'axe du moteur en aval par rapport à la soufflante ne serait pas toujours dans l'alignement de l'axe de la soufflante. Dans une suspension de l'art antérieur, le point d'attache au niveau du carter d'échappement est fixe en hauteur par rapport au pylône quel que soit le régime du moteur. Les bielles reliant le carter d'échappement à la poutre fixée sur le pylône sont certes articulées par l'intermédiaire de rotules de façon à assurer une liaison isostatique, mais leur assemblage avec des degrés de liberté dans les directions axiales et dilatations radiales ne ménage aucun degré de liberté selon l'axe vertical.

Lors des changements de régime du moteur, il se produit des variations dimensionnelles notamment des parties du moteur soumises aux variations de température des gaz moteurs. Ces variations se traduisent par une dilatation du carter d'échappement et un déplacement vertical de l'axe moteur par rapport au pylône.

Afin de remédier à ce problème, on ménage conformément à l'invention une suspension avec un élément actif selon la direction verticale entre le carter d'échappement et le pylône. Cet élément a pour fonction de raccourcir la distance entre le pylône et le carter quand ce dernier se dilate de façon à maintenir les axes de soufflante et de turbine coaxiaux.

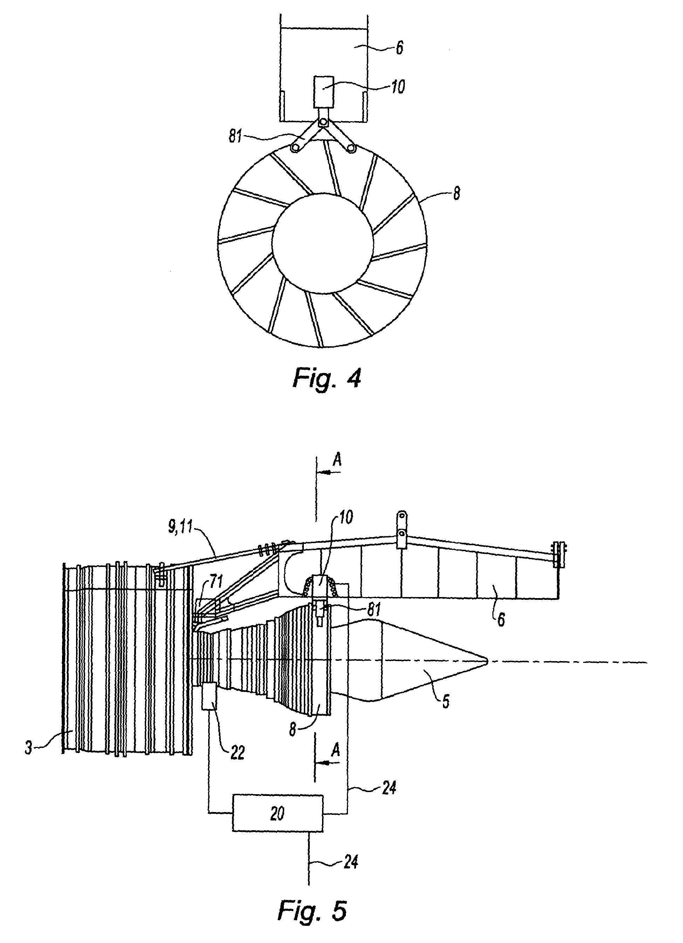

L'élément actif est avantageusement constitué d'un vérin 10 dont une extrémité est, comme cela est visible sur la figure 4, solidaire du pylône 6, de préférence logée dans le caisson du pylône, et l'autre extrémité mobile par rapport à la première est reliée à la suspension 81, elle-même rattachée au carter d'échappement 8. La suspension 81 est formée ici de deux biellettes montées par l'intermédiaire de liaisons à rotules.

Selon un mode de réalisation, comme cela est représenté sur la figure 5, l'alimentation 24, en fluide moteur par exemple dans le cas d'un vérin hydraulique 10, est commandée par une vanne 20 qui est pilotée par un capteur délivrant un signal de commande pour la vanne et qui mesure la coaxialité entre le carter de soufflante et la turbine.

Ce capteur peut être disposé sur le compresseur du turboréacteur au niveau des étages à haute pression et délivrer un signal en fonction du jeu en sommet d'aube, par capacité électrique par exemple. Il s'agit du jeu entre l'extrémité distale des aubes du compresseur et le carter délimitant la veine d'air. En cas de variation de régime, ce jeu subit une variation liée à la différence de dilatation entre les pièces mobiles et les parties fixes du compresseur. Ce jeu est donc un indicateur de la dilation du carter d'échappement ; Le signal fourni par le capteur est introduit dans le circuit de commande du vérin. La hauteur peut ainsi être modifiée de telle manière que l'axe de la turbine soit maintenu coaxiale à celui de la soufflante.

D'autres moyens de pilotage du vérin sont envisageables. On peut par exemple disposer un capteur mesurant l'angle formé par l'axe de l'arbre de turbine et l'axe de la soufflante et asservir le vérin à la mesure de cet angle.

Tout autre type de vérin ou autre moyen équivalent peut être utilisé également.

## Revendications

1. Ensemble constitué d'un turboréacteur multiflux (1) pourvu d'un carter intermédiaire (7) et d'un carter d'échappement (8), d'un pylône pouvant être fixé à la structure d'un aéronef, et d'une suspension du turboréacteur au pylône, ladite suspension comprenant un moyen d'accrochage avant (71) entre le moyeu du carter intermédiaire (7) et ledit pylône (6) et un moyen d'accrochage arrière (81) entre le carter d'échappement (8) et le pylône (6), **caractérisé par le fait que** la suspension comprend également un moyen de liaison (9, 11) reliant rigidement le carter intermédiaire (7) au pylône, et que le moyen d'accrochage arrière (81) comprend un moyen pour compenser les variations de diamètre du carter d'échappement de manière à maintenir l'axe du carter d'échappement coaxial à l'axe du carter intermédiaire pendant les différentes phases de vol de l'aéronef.

2. Ensemble selon la revendication 1 dont ledit moyen pour compenser les variations de diamètre du carter d'échappement comprend un vérin (10) susceptible de faire varier la distance du carter d'échappement au pylône.

3. Ensemble selon la revendication 1 ou 2 dont le dit moyen pour compenser les variations de diamètre est piloté par un capteur fournissant un signal de commande représentatif de la coaxialité du moteur.

4. Ensemble selon la revendication précédente dont le capteur fournit un signal représentatif de la mesure du jeu en sommet des aubes de soufflante.

5. Ensemble selon la revendication 3 dont le capteur fournit un signal représentatif de la mesure de l'angle entre l'axe de la turbine et l'axe du carter intermédiaire.

6. Ensemble selon la revendication 1 dont le moyen de liaison reliant rigidement le carter intermédiaire au pylône comprend deux bielles (9 et 11) attachées en amont à la virole externe du carter intermédiaire et en aval au pylône (6).

## Claims

1. Unit of a multi-flow turbojet engine (1) provided with an intermediate casing (7) and an exhaust casing (8), of a pylon that can be attached to the structure of an aircraft, and of a suspension of said turbojet to the pylon said suspension comprising forward means of attachment (71) between the hub of the intermediate casing (7) and said pylon (6) and a rear means of attachment (81) between the exhaust casing (8) and the pylon (6), wherein the suspension also comprises a means of connection (9, 11) rigidly connecting the intermediate casing (7) to the pylon, and which is one wherein the rear means of attachment (81) comprises a means for compensating for the variations in diameter of the exhaust casing so as to keep the axis of the exhaust casing coaxial with the axis of the intermediate casing through the various phases of flight of the aircraft.

2. Unit as claimed in claim 1, in which said means for compensating for the variations in diameter of the exhaust casing comprises an actuator (10) capable of varying the distance from the exhaust casing to the pylon.

3. Unit as claimed in claim 1 or 2, in which said means for compensating for the variations in diameter is driven by a sensor that supplies a control signal representing the coaxiality of the engine.

4. Unit as claimed in the preceding claim, in which the sensor provides a signal representative of the measurement of the fan blade tip clearance.

5. Unit as claimed in claim 3, in which the sensor provides a signal representative of the measurement of the angle between the axis of the turbine and the axis of the intermediate casing.

6. Unit as claimed in claim 1, in which the means of connection rigidly connecting the intermediate casing to the pylon comprises two link rods (9,11) attached at the upstream end to the external shell ring of the intermediate casing and at the downstream end to the pylon (6).

## Patentansprüche

1. Anordnung, bestehend aus einem Mehrstrom-Strahltriebwerk (1), der mit einem Zwischengehäuse (7) und einem Abgasgehäuse (8) versehen ist, aus einem Pylon, der an der Struktur eines Luftfahrzeugs befestigt werden kann, und aus einer Aufhängung des Strahltriebwerks an dem Pylon, wobei die Aufhängung ein vorderes Kopplungsmittel (71) zwischen der Nabe des Zwischengehäuses (7) und dem Pylon (6) und ein hinteres Kopplungsmittel (81) zwischen dem Abgasgehäuse (8) und dem Pylon (6) umfasst, **dadurch gekennzeichnet, dass** die Aufhängung auch ein Verbindungsmittel (9, 11) umfasst, und dass das hintere Kopplungsmittel (81) ein Mittel zum Ausgleichen der Durchmesservariationen des Abgasgehäuses umfasst, um die Achse des Abgasgehäuses koaxial zur Achse des Zwischengehäuses während der verschiedenen Flugphasen des Luftfahrzeugs zu halten.

2. Anordnung nach Anspruch 1, wobei das Mittel zum Ausgleichen der Durchmesservariationen des Abgasgehäuses einen Zylinder (10) umfasst, der in der Lage ist, den Abstand des Abgasgehäuses zum Pylon zu ändern.

3. Anordnung nach Anspruch 1 oder 2, wobei das Mittel zum Ausgleichen der Durchmesservariationen von einem Sensor angesteuert wird, der ein Steuersignal bereitstellt, das die Koaxialität des Motors darstellt.

4. Anordnung nach dem vorhergehenden Anspruch, wobei der Sensor ein Signal bereitstellt, welches das Maß des Spiels an der Spitze der Gebläseschaufeln darstellt.

5. Anordnung nach Anspruch 3, wobei der Sensor ein Signal bereitstellt, welches das Maß des Winkels zwischen der Achse der Turbine und der Achse des Zwischengehäuses darstellt.

6. Anordnung nach Anspruch 1, wobei das Verbindungsmittel, welches das Zwischengehäuse starr mit dem Pylon verbindet, zwei Schubstangen (9 und 11) umfasst, die oberhalb an dem Außendeckband des Zwischengehäuses und unterhalb an dem Pylon (6) angebracht sind.
